# EUROPÄISCHE PATENTANMELDUNG

(11) **EP 1 544 775 A1**
(43) Veröffentlichungstag der Anmeldung: **22.06.2005**
(21) Anmeldenummer: 04106521.0
(22) Anmeldetag: 13.12.2004
(51) Int. Cl.: G06F 17/60

(54) **Verfahren zum Anbahnen und Abwickeln von Waren oder Dienstleistungen betreffenden Geschäftstransaktionen und Vorrichtung zum Durchführen des Verfahrens**

(30) Priorität: 11.12.2003 DE 10357846; 02.04.2004 DE 102004016271
(71) Anmelder: Boesche Marketing GmbH, 26188 Edewecht (DE)
(72) Erfinder: Boesche, Axel, 26188, Edewecht (DE)
(74) Vertreter: von Ahsen, Erwin-Detlef, Dipl.-Ing.

(57) **Zusammenfassung**

Bei einem Verfahren und einer Vorrichtung zum Anbahnen und Abwickeln von Waren oder Dienstleistungen betreffenden Geschäftstransaktionen, insbesondere zum Bestehen von Waren und/oder zum Anfordern von Informationen kann ein Kunden einfach und unkompliziert Waren bestehen und Dienstleistungen oder Informationen anfordern, so daß ihm dies auch spontan und ohne Vorbereitung möglich ist, wenn er mit einer mobilen Fotografier- und Sendeeinrichtung (1) zumindest ein Bild einer Ware bzw. einer Wareninformation oder Dienstleistungsinformation anfertigt, das Bild mit der Fotografier- und Sendeeinrichtung (1) zu einem Gateway (3) übertragen wird, in welchem das aufgenommene Bild mit hinterlegten Daten des Kunden verknüpft wird, und wenn das Bild mit den Daten des Kunden einem die Ware (4) ausliefernden Dienstleister zugesandt wird.

## Beschreibung

Die Erfindung betrifft ein Verfahren zum Anbahnen und Abwickeln von Waren oder Dienstleistungen betreffenden Geschäftstransaktionen, insbesondere zum Bestellen von Waren und/oder zum Anfordern von Informationen. Die Erfindung betrifft weiterhin eine Vorrichtung zum Anbahnen und Abwickeln von Waren und/oder Dienstleistungen betreffenden Geschäftstransaktionen, insbesondere zum Bestellen von Waren und/oder zum Anfordern von Informationen, insbesondere zur Durchführung des Verfahrens.

Waren und Dienstleistungen können auf herkömmliche Art in Großhandels- oder Einzelhandelsgeschäften unmittelbar gekauft, bestellt bzw. beansprucht werden. Häufig ist jedoch ein Kauf bzw. eine Bestellung vor Ort nicht möglich, so daß ein Kunde auf eine Fernbestellung auszuweichen hat. Für diese Fernbestellungen sind beispielsweise Bestellungen über das Telefon, Telefax und über das Internet bekannt.

Eine Bestellung über das Telefon und das Telefax sowie über das Internet setzt eine längere Tätigkeit des Kunden voraus. Der Kunde hat anzurufen, ein Telefax vorzubereiten oder auf einer Internetseite eines Dienstleisters Angaben zu Bestellgegenstand und Lieferadresse zu machen. Bei Benutzung eines Telefaxgerätes ist zudem dieses an ein Telefon-Festnetz angeschlossene Gerät aufzusuchen.

Der Erfindung liegt die Aufgabe zugrunde, ein Verfahren und eine Vorrichtung anzugeben, mit denen ein Kunden einfach und unkompliziert Waren bestehen und Dienstleistungen oder Informationen anfordern kann, so daß ihm dies auch spontan und ohne Vorbereitung möglich ist.

Diese Aufgabe wird dadurch gelöst, daß der Kunde bei einem Verfahren der eingangs genannten Art mit einer mobilen Fotografier- und Sendeeinrichtung zumindest ein Bild einer Ware bzw. einer Wareninformation oder Dienstleistungsinformation anfertigt, daß das Bild mit der Fotografier- und Sendeeinrichtung zu einem Gateway übertragen wird, in welchem das aufgenommene Bild mit hinterlegten Daten des Kunden verknüpft wird, und daß das Bild mit den Daten des Kunden einem die Ware ausliefernden Dienstleister zugesandt wird.

Bei dem erfindungsgemäßen Verfahren ist es nicht erforderlich, daß der Kunde einem Dienstleister oder einem Lieferanten einer Ware auf einem Kommunikationsweg, beispielsweise per Telefon oder Telefax, manuell Daten zu interessierender Ware, Lieferadresse und Liefermodernitäten übermittelt. Vielmehr werden diese Daten von einem Gateway in automatisierter Weise einem Bild einer Ware zugeordnet, das der Kunde mit Hilfe seiner mitgeführten mobilen Fotografier- und Sendeeinrichtung an das Gateway sendet.

Für den Kunden ist es somit ermöglicht, mit der Fotografier- und Sendeeinrichtung spontan ein Bild einer ihn interessierenden Ware oder zu einer ihn interessierenden Dienstleistung aufzunehmen, die beispielsweise an Plakatwänden, Litfaßsäulen, Internetseiten oder Zeitungsanzeigen ihm offenbart wird. Dieses Bild sendet er an das Gateway, ohne daß in seiner Fotografier- und Sendeeinrichtung eine Dekodierung oder Kodierung dieses Bildes durchgeführt wird. Diese Dekodierung oder Kodierung erfolgt vorzugsweise erst im Gateway, wo dieses Bild vorzugsweise in einen maschinenlesbaren Code umgesetzt wird und mit vorzugsweise im Gateway hinterlegten Daten des Kunden oder des Anbieters der Ware oder Dienstleistung verknüpft wird. Dem Bild werden somit im Gateway in automatisierter Weise Daten wie Name und Anschrift sowie Zahlungsmethode hinzugefügt und anschließend wird dieses Paket aus Bildinformationen und Adress- und Zahlungsmodalitätsinformationen an den Dienstleister zugesandt. Dieser kann daraufhin die Auslieferung der bestellten Ware sowie die Abrechnung vornehmen.

Eine auch separat einsetzbare Weiterbildung zeichnet sich dadurch aus, daß der Kunde mit einer mobilen Fotografier- und Sendeeinrichtung zumindest ein Bild einer Ware bzw. einer Wareninformation oder Dienstleistungsinformation anfertigt, daß das Bild mit der Fotografier- und Sendeeinrichtung zu einem Gateway übertragen wird, und daß von dem Gateway direkt oder mittelbar dem Kunden wenigstens eine die Ware bzw. die Dienstleistung betreffende Information zugesandt wird. Nach einer Kodierung oder Dekodierung des Bildes im Gateway , können diese so erzeugten Daten mit im Gateway hinterlegten Daten des Anbieters der Ware oder Dienstleistung verknüpft und die so erzeugten Informationen an den Kunden zurückgesandt werden. Dieser kann daraufhin mobil die ihm zur Verfügung gestellten Informationen nutzen.

Nach einer Weiterbildung der Erfindung kann mit der Fotografier- und Sendeeinrichtung ein Bild eines Codes der Ware angefertigt werden. Bei dieser Weiterbildung erfolgt in der Fotografier- Sendeeinrichtung keine Dekodierung eines Codes, sondern es wird ein der Ware zugeordneter Code mit der Fotografier- und Sendeeinrichtung lediglich aufgenommen. Dieser Code kann beispielsweise ein ohnehin im Zusammenhang mit der Ware verwendeter Barcode, Data-Matrix-Code oder QR-Code sein.

Nach einer nächsten Weiterbildung der Erfindung ist vorgesehen, daß als mobile Fotografier- und Sendeeinrichtung ein Mobiltelefon mit eingebauter Kamera verwendet wird. Derartige Kamera - Mobiltelefone stellen in äußerst kompakter Form die Kombination einer Fotografiereinrichtung und einer Sendeeinrichtung zur Verfügung. Mit einer eingebauten Kamera kann ein derartiges mobiles Telefon ein digitales Foto aufnehmen, das eine für die Zwecke dieses Verfahrens hinreichende Auflösung hat. Dieses aufgenommene Bild kann dann mit diesem Mobiltelefon als sogenannte Multimedia Message (MMS) an das Gateway gesandt werden. Dazu wird das ohnehin vorhandene Mobiltelefonnetz verwendet. Damit ein Kunde das erfindungsgemäße Verfahren durchführen kann, ist somit vorteilhaft nicht erforderlich, eine zusätzliche spezielle Fotografier- und Sendeeinrichtung mit sich zu führen. Es kann vielmehr das häufig ohnehin vorhandene Kamera - Mobiltelefon verwendet werden.

Im Gateway wird vorzugsweise eine Mustererkennungssoftware eingesetzt, welche Waren bzw. Warencodes identifiziert. Eingehende Bildnachrichten von der Fotografier- und Sendeeinrichtung werden im Gateway verarbeitet. Sie können im Gateway in eine maschinenlesbare Bitfolge umgesetzt werden, die einer bestimmten und auf dem Bild aufgenommenen Ware eindeutig zuordenbar ist. Diese Identifizierung läuft automatisiert.

Im Zuge dieser Identifizierung kann von dem Gateway eine Anfrage an den Mobilfunkprovider des Kunden nach erforderlichen Daten des Kunden gerichtet werden. Bei dem Mobilfunkprovider sind die erforderlichen Daten für die Abwicklung einer Warenbestellung gespeichert. Der Mobilfunkprovider stellt dem nach dem Verfahren arbeitenden Gateway die Adresse des Kunden zur Verfügung. Diese Informationen werden dann im Gateway verarbeitet und einem von diesem Kunden eingegangenen Bild einer Ware zugeordnet.

Bei einer anderen Weiterbildung der Erfindung ist vorgesehen, daß von dem Gateway eine Information an den Kunden zugesandt wird, welche eine Datennetz-Adresse enthält. Dem Benutzer der mobilen Fotografier- und Sendeeinrichtung kann auf diese Weise eine Datennetz-Adresse des Anbieters einer Ware oder einer Dienstleistung zugesandt werden, welcher der Benutzer begegnet. Diese Datennetz-Adresse kann beispielsweise eine Internet- oder WAP-Adresse sein. Ein Mobiltelefon als Fotografier- und Sendeeinrichtung ist häufig mit einem Datennetz-Browser ausgerüstet, mit dem mobil Zugang zu Datennetzen, wie dem Internet oder dem WAP-Netz, genommen werden kann. Erhält somit der Kunde die Netzadresse des Anbieters der Ware, kann er sich auf eine Seite des Anbieters mobil einwählen und seine Bestellung aufgeben. Durch die vorzugsweise vorgesehene Verknüpfung des zunächst an das Gateway gesandten Bildes des Codes der Ware oder der Dienstleistung mit den von einem Mobilfunkprovider angeforderten persönlichen Daten des Kunden wird dem Kunden die Bestellung im Datennetz erleichtert. Es kann nämlich vorgesehen sein, daß in einer von dem Kunden dann aufgerufenen Datennetz-Seite bereits die vom Gateway übermittelten persönlichen Daten des Kunden eingetragen sind, so daß er sich das umständliche Eingeben von Angaben wie Name, Anschrift und dergleichen ersparen kann. Die Datennetz-Seite des Anbieters der Ware bzw. der Dienstleistung ist für den Kunden somit vorbereitet, so daß er die Bestellung sogleich aufgeben kann. Die Information des Gateways kann auch ein Java-Programm enthalten, mit dem gleichfalls derartige Bestellerleichterungen vorgenommen werden können. Kundeninformationen können ebenfalls im Gateway gespeichert sein.

Verfahrensseitig ist schließlich noch vorgesehen, daß der Dienstleister und/oder das Gateway nach Eingang der Bestellung des Kunden eine Bestellbestätigung an die mobile Fotografier- und Sendeeinrichtung des Kunden sendet. Diese Bestellbestätigung kann beispielsweise in Form einer Kurzmitteilung (SMS) an vorzugsweise das Mobiltelefon des die Bestellung abgesandten Kunden gesandt werden. Der Kunde erhält somit zeitnah nach Absenden seiner Bestellung eine Bestätigung dahingehend, daß die Lieferung der Ware eingeleitet wird. Inhalt dieser Bestellbestätigung kann auch sein, daß die bestellte Ware gegenwärtig nicht vorrätig ist und zu einem späteren Zeitpunkt oder gar nicht verfügbar ist.

Zur vorrichtungsseitigen Lösung der Aufgabe ist vorgesehen, daß die vorstehend genannte Vorrichtung insbesondere zum Bestellen von Waren wenigstens ein Mobiltelefon mit eingebauter Kamera und insbesondere mit einer Zugangseinrichtung für zumindest ein Datennetz umfaßt.

Mit diesem Mobiltelefon wird die für das vorbezeichnete Verfahren benötigte mobile Fotografier- und Sendeeinrichtung zur Verfügung gestellt. Das Mobiltelefon kann ein handelsübliches Mobiltelefon mit eingebauter digitaler Kamera sein, wobei vozugsweise mit dem Mobiltelefon die Möglichkeit des Zugangs zu einem Datennetz besteht.

Die Vorrichtung umfaßt vorzugsweise weiterhin wenigstens ein Gateway, in dem eine für das Verfahren erforderliche Mustererkennungssoftware gespeichert ist. Das Gateway stellt die erforderlichen Kapazitäten zur Verfügung, um die Erkennungssoftware zu speichern und um verarbeitende Daten zwischenspeichern zu können.

Nach einer Weiterbildung der Erfindung weist das Gateway wenigstens eine Kommunikationsverknüpfung zu den Speicherressourcen zumindest eines Mobilfunkproviders auf. Diese Kommunikationsverbindung dient zur Übertragung von für die Verarbeitung einer Bestellung oder einer Anfrage eines Kunden erforderlichen Daten des Kunden vom Mobilfunkprovider zum Gateway. Vorzugsweise sind redundante Kommunikationsverknüpfungen zu den Speicherressourcen aller im Einsatzgebiet dieser Vorrichtung bzw. dieses Verfahrens zugelassenen Mobilfunkprovider vorgesehen, so daß das erfindungsgemäße Verfahren und die erfindungsgemäße Vorrichtung unabhängig von dem von den Kunden ausgewählten Mobilfunkprovidern eingesetzt werden kann.

Nach einer nächsten Weiterbildung ist vorgesehen, daß das Gateway wenigstens eine Kommunikationsverbindung zu den Speicherressourcen zumindest eines die Ware ausliefernden Dienstleisters hat. Über diese Kommunikationsverbindungen werden die Bildinformationen und Adressinformationen des Kunden dem Dienstleister zur Verfügung gestellt. Dieser kann sie auf seinen Speicherressourcen ablegen und daraufhin die Auslieferung der Ware einleiten.

Zur weiteren Ausbildung der erfindungsgemäßen Vorrichtung ist noch vorgesehen, daß von den Speicherressourcen des Dienstleisters und/oder vom Gateway eine Funkverbindung mit dem Mobiltelefon des Kunden zum Übertragen einer Nachricht aufbaubar ist. Über diese Funkverbindung wird dem Kunden eine Bestellbestätigung oder eine Bestellverweigerung auch drahtlos zugestellt, so daß dieser über den Eingang seiner Bestellung vollständig informiert ist.

Nachfolgend werden Ausführungsbeispiele von Vorrichtungen mit den Erfindungsmerkmalen an Hand der Zeichnungen näher erläutert. Es zeigen:
Fig. 1 eine schematische Übersichtsdarstellung einer Vorrichtung mit den Erfindungsmerkmalen nach einem ersten Ausführungsbeispiel,
Fig. 2 eine Abbildung ähnlich Fig. 1 einer Vorrichtung mit den Erfindungsmerkmalen nach einem zweiten Ausführungsbeispiel, und
Fig. 3 eine schematische Darstellung einer Multimediaplattform mit den Erfindungsmerkmalen nach einem weiteren Ausführungsbeispiel.

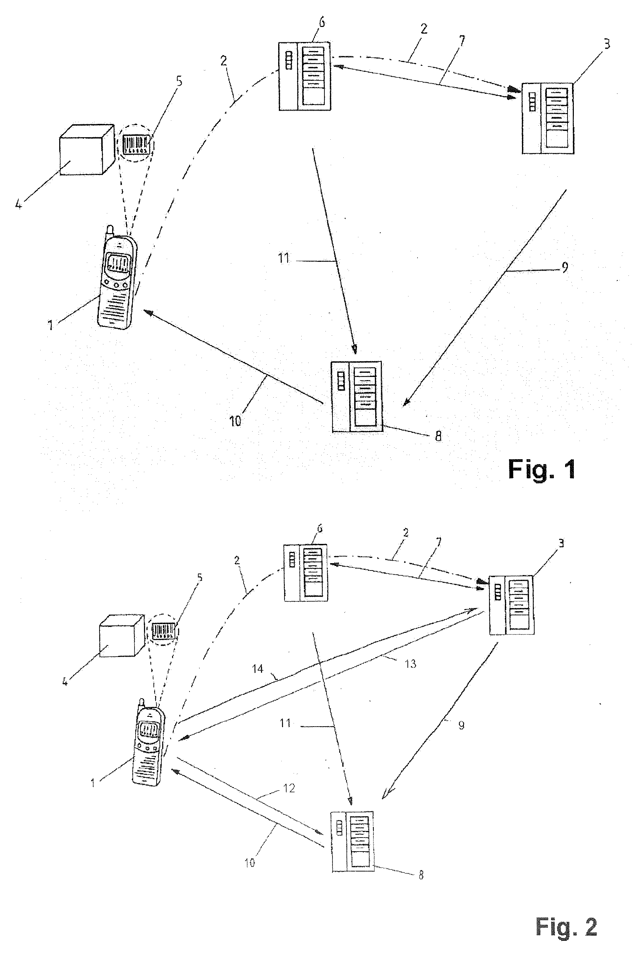

Fig. 1 zeigt eine schematische Übersichtsdarstellung einer Vorrichtung mit den Erfindungsmerkmalen nach einem ersten Ausführungsbeispiel. Teil der Vorrichtung ist ein Mobiltelefon 1 mit eingebauter Kamera. Statt eines Mobiltelefons 1 kann auch eine Kombination aus einer digitalen Kamera und einem sendefähigen tragbaren Computer vorgesehen sein. Über eine Mobilfunkverbindung 2 ist das Mobiltelefon 1 mit einem Gateway 3 verbunden.

Mit dem Mobiltelefon 1 kann mit der eingebauten Kamera eine Ware 4 bzw. der Code 5 der Ware 4 aufgenommen werden. Das aufgenommene Bild wird über die Mobilfunkverbindung 2 an das Gateway 3 gesandt. In dem Gateway 3 ist eine Mustererkennungssoftware abgespeichert, mit der der übertragene Code 5 oder auch ein übertragenes Bild der Ware 4 selbst erkannt werden kann.

Weiterhin erfolgt in diesem Gateway 3 eine Verknüpfung der über die Mobilfunkverbindung 2 übertragenen Daten zu der Ware 4 mit Daten zu dem das Mobiltelefon 1 benutzenden Kunden. Dazu ist zwischen dem Gateway 3 und einer Speicherressource 6 eines Mobilfunkproviders eine Kommunikationsverknüpfung 7 ausgebildet. Über diese Kommunikationsverknüpfung 7 können Daten des das Mobiltelefon 1 Benutzenden an das Gateway 3 übertragen werden. Dort werden diese Daten mit Informationen über die Ware 4 verknüpft.

Ein weiteres Element der erfindungsgemäßen Vorrichtung sind Speicherressourcen 8 eines Dienstleisters. Die Speicherressourcen 8 sind über eine Kommunikationsverbindung 9 mit dem Gateway 3 verknüpft. Über diese Verknüpfung sind die Informationen zu der Ware 4 und den Daten des das Mobiltelefon 1 Benutzenden an den Dienstleister übertragbar. Dieser Dienstleister kann anschließend die Geschäftstransaktion, insbesondere die Auslieferung einer Ware, vornehmen. Über eine Kommunikationsverbindung 10 wird von den Speicherressourcen 8 an das Mobiltelefon 1 eine entsprechende Bestätigung gesandt.

Die Bezahlung der Ware 4 kann vorzugsweise auch durch die erfindungsgemäße Vorrichtung in automatisierter Weise vorgenommen werden. Dazu kann zwischen den Speicherressourcen 8 des Dienstleisters und den Speicherressourcen 6 des Mobilfunkproviders eine Kommunikationsverbindung 11 aufgebaut sein, über welche eine Belastung des bei dem Mobilfunkprovider geführten Kundenkontos des das Mobiltelefon 1 Benutzenden durchgeführt wird. Der die Ware 4 ausliefernde Einzelhändler wird von dem die Speicherressourcen 6 betreibenden Mobilfunkprovider ausgezahlt, woraufhin der Mobilfunkprovider den ausgezahlten Betrag auf dem Kundenkonto des das Mobiltelefon 1 Benutzenden belastet.

Fig. 2 zeigt eine Abbildung ähnlich Fig. 1 einer Vorrichtung mit den Erfindungsmerkmalen nach einem zweiten Ausführungsbeispiel. Die Vorrichtung sowie deren Arbeitsweise entspricht im wesentlichen der von Fig. 1. Gleiche Elemente tragen die gleichen Bezugsziffern. Die Speicherresourcen 8 des Dienstleisters, der Lieferant der Ware 4 ist, werden von dem Mobiltelefon 1 über eine Datennetzverbindung 12 erreicht. Diese Datennetzverbindung 12 kann beispielsweise das Internet oder ein WAP-Netz sein. Damit von dem Mobiltelefon 1 die Speicherresourcen 8 erreicht werden können, werden erfindungsgemäß dem Mobiltelefon 1 vom Gateway 3 über eine Verbindung 13 Informationen über den Dienstleister zugesandt. Diese Informationen werden zugleich mit Daten des das Mobiltelefon 1 Benutzenden verknüpft, die sich das Gateway 3 von eigenen Speicherresourcen oder den Speicherresourcen 6 des Mobilfunkproviders über die Kommunikationsverknüpfung 7 besorgt hat. Über die mobile Verbindung 13 werden dem Mobiltelefon 1 somit Zugangsdaten für das Aufbauen einer Kommunikation 12 mit dem Dienstleister zugesandt. Über eine Kommunikationsverbindung 14 und die Kommunikationsverbindung 9 kann auch eine Verbindung des Mobiltelefons 1 zu den Speicherresourcen 8 des Dienstleisters erfolgen. Diese Kommunikation wird über das Gateway 3 durchgeführt. Von dem Gateway 3 kann dabei beispielsweise eine Internetseite des Dienstleisters bereitgehalten werden, welche von dem das Mobiltelefon 1 Benutzenden komplettiert wird. Ist diese Internetseite dann vollständig ausgefüllt, wird Sie über die Kommunikationsverbindung 9 dem Dienstleister zur Verfügung gestellt.

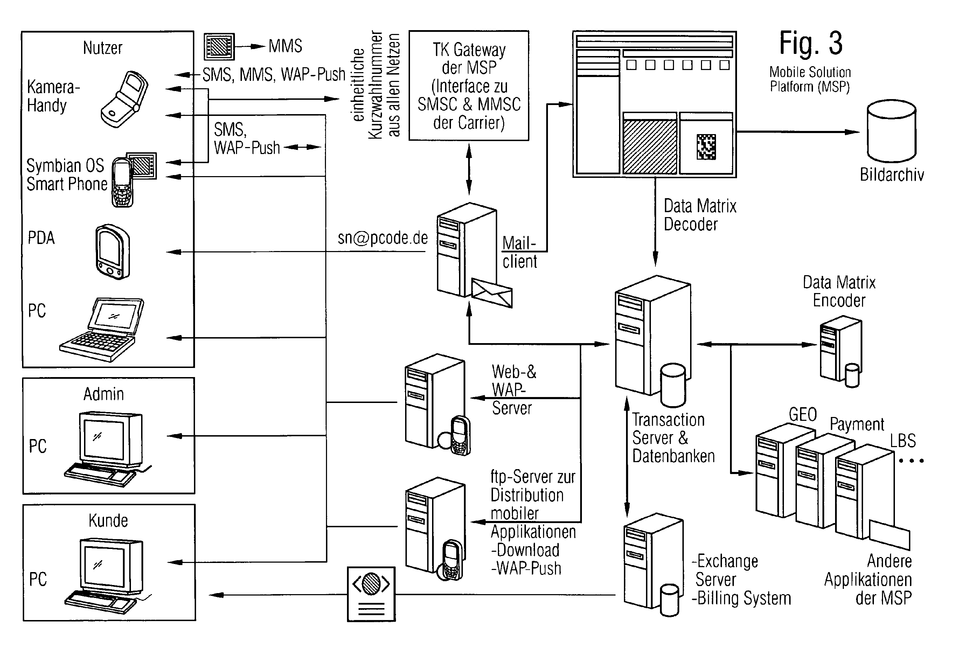

Fig. 3 zeigt eine schematische Darstellung einer Multimediaplattform mit den Erfindungsmerkmalen nach einem weiteren Ausführungsbeispiel. Wie sich der Figur entnehmen läßt, ist ein Kunde, in der Figur als Nutzer bezeichnet, mittels eines Mobiltelefons, nämlich eines Kamerahandys oder eines Smart Phones, mit einem Telekommunikationsgateways verbunden. Ein mittels der integrierten Kamera des Mobiltelefons aufgenommener Code wird mittels MMS an das Telekommunikationsgateway übertragen, das den aufgenommenen Code zur Decodierung an einen Mail-Client weiterleitet. Der Mail-Client vergleicht den aufgenommenen Code mit in einem Bildarchiv gespeicherten Codes und leitet das Ergebnis dieses Vergleichs an einen Transaction-Server weiter. Abhängig von dem erhaltenen Vergleichsergebnis leitet der Transaction-Server die dem Code zugehörige Transaktion ein.

Bei der eingeleiteten Transaktion kann es sich um die Lieferung von Informationen oder Waren an den Nutzer handeln. Zu diesem Zweck wird die dem Code zugeordnete Applikation von dem Transaction Server mittels eines Data Matrix Encoders bestimmt und von dem zugehörigen Applikation Server abgerufen. Im Falle der Anforderung kostenpflichtiger Waren oder Dienstleistungen erfolgt die Bezahlung ebenfalls über einen Applikation Server, der die Kosten der gewünschten Transaktion dem Nutzer belastet. Zu diesem Zweck werden die Daten des Nutzers von dem Telekommunikationsbetreiber erfragt.

Für den Fall, daß mittels des Codes Informationen, beispielsweise zu einem Produkt, abgefragt worden sind, veranlaßt der Transaction Server sodann die Weiterleitung der Informationen an die gewünschte Empfangsadresse des Nutzers. Dies kann neben dem Mobiltelefon auch ein PDA oder ein Computer sein. Bestellte Waren oder Dienstleistungen, wie beispielsweise Klingeltöne oder Downloads, werden auf Veranlassung des Transaction Servers über einen Web- & WAP Server oder über einen ftp-Server an die gewünschte Empfangsadresse weiterleitet.

Ein oder mehrere Administratoren können von ihrem Computer aus das System überwachen und die auf den Servern gespeicherten Daten und Programme aktualisieren. In der Figur als Kunde bezeichnete Lieferanten oder Dienstleister werden von dem Transaction Server über einen Exchange Server von stattgefundenen Transaktionen unterrichtet und mittels eines dort installierten Billing Systems entsprechend den stattgefundenen Transaktionen belastet bzw. vergütet. Die Unterrichtung kann beispielsweise auch über den Mail Client, den Web-& WAP-Server oder den ftp-Server erfolgen.

Mit dem erfindungsgemäßen Verfahren und der erfindungsgemäßen Vorrichtung läßt sich eine Verknüpfung von elektronischen Dienstleistungen mit konventionellen Printmedien schaffen. Es ist damit möglich, mittels eines Fotohandys auf Printmedien zu reagieren. Beispielsweise können zu in Anzeigen beworbenen oder in Artikel beschriebenen Waren oder Dienstleistungen Informationen, wie beispielsweise Datenblätter, Händlernachweise oder Kundendienstbetriebe, mittels Senden eines aufgeneommenen Bildes, wie beispielsweise eines Codes, an ein Telekommunikationsgateway angefordert werden. Auf diese Anforderung kann entsprechend derselben die gewünschte Information an den Kunden gesendet, das Produkt geliefert oder das gewünschte Unterhaltungsmedium bereitgestellt werden.

Dabei ist es bei dem erfindungsgemäßen Verfahren und der erfindungsgemäßen Vorrichtung von Vorteil, daß jedes beliebige Fotohandy genutzt werden kann. Weil nämlich lediglich der in den Printmedien abgedruckte Code fotografiert und via MMS an das Gateway weitergeleitet wird, sind das Fabrikat oder das Betriebssystem sowie andere Merkmale des Fotohandys ohne Einfluß auf das erfindungsgemäße Verfahren.

In einem ersten Schritt erfolgt bei dem erfindungsgemäßen Verfahren ein Angebot eines Herstellers oder Dienstleisters in einem Printmedium. Dazu kann beispielsweise eine Anzeige in einer Zeitschrift, auf einem Plakat oder einer Litfaßsäule dienen. So kann ein beworbenes Produkt mit einem Code versehen werden.

In einem zweiten Schritt wird das Produkt oder der diesem zugeordnete Code mittels des Fotohandys fotografiert.

Gegenstand eines dritten Schrittes ist es, dieses Foto per MMS an ein Telekommunikationsgateway zu senden.

In einem vierten Schritt wird diese MMS mittels einer im Gateway bereitgehaltenen Bilderkennungssoftware erkannt, und zu Weiterbearbeitung des dadurch repräsentierten Auftrags weitergeleitet.

In einem fünften Schritt erfolgt die Weiterbearbeitung. Dazu wird das erkannte Bild dekodiert und wahlweise entweder mit Informationen des Absenders verknüpft an den Dienstleister weitergeleitet oder entsprechend der Anforderung des Kunden die gewünschte Information aus einem Speicher abgerufen und an den Kunden weitergeleitet. Über den Mobilfunkprovider des Kunden ist eine Identifikation des Kunden und sogar des momentanen Standortes möglich. Weiter können im Bedarfsfall auch Informationen über das Endgerät des Kunden abgefragt werden. Nach Verarbeitung des Antrags des Kunden erfolgt eine Rückantwort beispielsweise zur Auftragsbestätigung. Außerdem kann eine statistische oder sonstige Auswertung erfolgen, deren Ergebnis dem in dem Printmedium Werbenden weitergeleitet wird.

In einem sechsten Schritt erfolgt dann die Lieferung der Ware oder die Erbringung der Dienstleistung beispielsweise in Form einer multimedialen Antwort.

### Bezugszeichenliste:

- 1.: Mobiltelefon
- 2.: Mobilfunkverbindung
- 3.: Gateway
- 4.: Ware
- 5.: Code
- 6.: Speicherresourcen
- 7.: Kommunikationsverknüpfung
- 8.: Speicherresourcen
- 9.: Kommunikationsverbindung
- 10.: Kommunikationsverbindung
- 11.: Kommunikationsverbindung
- 12.: Datennetzverbindung
- 13.: Verbindung
- 14.: Kommunikationsverbindung

## Patentansprüche

1. Verfahren zum Anbahnen und Abwickeln von Waren oder Dienstleistungen betreffenden Geschäftstransaktionen, insbesondere zum Bestellen von Waren und/oder zum Anfordern von Informationen,
**dadurch gekennzeichnet,**
**daß** ein Kunde mit einer mobilen Fotografier- und Sendeeinrichtung (1) zumindest ein Bild einer Ware (4) bzw. einer Wareninformation (5) oder einer Dienstleistungsinformation anfertigt, daß das Bild mit der Fotografier- und Sendeeinrichtung (1) zu einem Gateway (3) übertragen wird, in welchem das aufgenommene Bild mit hinterlegten Daten des Kunden verknüpft wird, und daß das Bild mit den Daten des Kunden einem die Ware (4) ausliefernden Dienstleister zugesandt wird.

2. Verfahren nach Anspruch 1, **dadurch gekennzeichnet, daß** von dem Gateway (3) direkt oder mittelbar dem Kunden wenigstens eine die Ware (4) bzw. die Dienstleistung betreffende Information zugesandt wird.

3. Verfahren nach Anspruch 1 oder 2, **dadurch gekennzeichnet, daß** mit der Fotografier- und Sendeeinrichtung (1) ein Bild eines Codes (5) der Ware (4) angefertigt wird, daß als Code (5) ein Barcode, ein Data-Matrix-Code oder ein QR-Code der Ware (4) oder der Dienstleistung verwendet wird, und/oder daß als mobile Fotografier- und Sendeeinrichtung ein Mobiltelefon (1) mit eingebauter Kamera verwendet wird.

4. Verfahren nach einem der Ansprüche 1 bis 3, **dadurch gekennzeichnet, daß** im Gateway (3) eine Mustererkennungssoftware eingesetzt wird, welche Ware (4) bzw. Warencode (5) identifiziert.

5. Verfahren nach einem der vorhergehenden Ansprüche, **dadurch gekennzeichnet, daß** von dem Gateway (3) eine Anfrage an einen Mobilfunkprovider nach Daten des Kunden gerichtet wird, und/oder daß von dem Gateway (3) ein Zugriff auf im Gateway (3) gespeicherte Daten des Kunden durchgeführt wird.

6. Verfahren nach einem der vorhergehenden Ansprüche, **dadurch gekennzeichnet, daß** dem Kunden von dem Gateway (3) eine Information zugesandt wird, welche eine Datennetz-Adresse und/oder ein Java-Programm enthält.

7. Verfahren nach einem der vorhergehenden Ansprüche, **dadurch gekennzeichnet, daß** der Dienstleister und/oder das Gateway (3) nach Eingang der Bestellung des Kunden eine Bestellbestätigung an die mobile Fotografier- und Sendeeinrichtung (1) des Kunden sendet.

8. Vorrichtung zum Anbahnen und Abwickeln von Geschäftstransaktionen, insbesondere zum Bestellen von Waren, insbesondere zur Durchführung des Verfahrens nach einem der Ansprüche 1 bis 7,
**dadurch gekennzeichnet,**
**daß** sie wenigstens ein Mobiltelefon (1) mit eingebauter Kamera und insbesondere mit einer Zugangseinrichtung für zumindest ein Datennetz umfaßt.

9. Vorrichtung nach Anspruch 8, **gekennzeichnet durch** wenigstens ein Gateway (3), in dem eine Mustererkennungssoftware gespeichert ist, das vorzugsweise wenigstens eine Kommunikationsverknüpfung (7) zu Speicherressourcen (6) zumindest eines Mobilfunkproviders aufweist, und das insbesondere wenigstens eine Kommunikationsverbindung (9) zu Speicherressourcen (8) zumindest eines die Ware ausliefernden Dienstleisters hat.

10. Vorrichtung nach Anspruch 9, **dadurch gekennzeichnet, daß** von den Speicherressourcen (8) des Dienstleisters und/oder vom Gateway (3) eine Funkverbindung mit dem Mobiltelefon (1) des Kunden zum Übertragen einer Nachricht aufbaubar ist, und/oder daß zwischen den Speicherressourcen (6) des Mobilfunkbetreibers und den Speicherressourcen (8) des Dienstleisters wenigstens eine Kommunikationsverbindung (11) ausgebildet ist.
